(19) Europäisches Patentamt

European Patent Office

Office européen des brevets

(11) **EP 0 542 579 B1**

(12) **EUROPEAN PATENT SPECIFICATION**

(45) Date of publication and mention
of the grant of the patent:
**26.05.1999 Bulletin 1999/21**

(51) Int Cl.⁶: **G02F 1/135**, G02F 1/136

(21) Application number: **92310448.3**

(22) Date of filing: **16.11.1992**

(54) **Display device provided with light waveguide**

Anzeigevorrichtung versehen mit Lichtwellenleiter

Dispositif d'affichage pourvu de guide d'onde optique

(84) Designated Contracting States:
**DE FR GB NL**

(30) Priority: **15.11.1991 JP 300430/91**
**09.12.1991 JP 324143/91**

(43) Date of publication of application:
**19.05.1993 Bulletin 1993/20**

(73) Proprietor: **SHARP KABUSHIKI KAISHA**
**Osaka-shi, Osaka-fu 545-0013 (JP)**

(72) Inventors:
  • **Yamamoto, Yuji**
    **Kobe-shi, Hyogo-ken (JP)**
  • **Miyago, Makoto**
    **Higashi-Osaka-shi, Osaka-fu (JP)**
  • **Tagusa, Yasunobu**
    **Ikoma-shi, Nara-ken (JP)**
  • **Hashimoto, Mikio**
    **Nara-shi, Nara-ken (JP)**

  • **Hattori, Yoshihiro**
    **Tenri-shi, Nara-ken (JP)**

(74) Representative: **Suckling, Andrew Michael et al**
    **Marks & Clerk,**
    **Nash Court,**
    **Oxford Business Park South**
    **Oxford OX4 2RU (GB)**

(56) References cited:
    **EP-A- 0 490 484          EP-A- 0 527 609**

  • **PATENT ABSTRACTS OF JAPAN vol. 14, no. 289
    (P-1065)21 June 1990 & JP-A-20 89 029
    ( MATSUSHITA ) 29 March 1990**
  • **PATENT ABSTRACTS OF JAPAN vol. 13, no. 448
    (P-942)9 October 1989 & JP-A-11 73 016
    ( TORAY ) 7 July 1989**
  • **PATENT ABSTRACTS OF JAPAN vol. 13, no. 424
    (P-934)21 September 1989 & JP-A-11 56 724
    ( TOSHIBA ) 20 June 1989**

## Description

BACKGROUND OF THE INVENTION

1. Field of the Invention

The present invention relates to a display device which is arranged to apply an image signal to pixel electrodes arranged in a matrix format through switching elements to display an image and operates the switching elements by a driving light signal.

2. Description of the Related Art

The inventors of the present application know that a heretofore-proposed electroluminescent display device or a plasma display device is arranged to selectively drive the pixel electrodes arranged in a matrix format for displaying an image on the screen. As one system for selectively driving the pixel electrodes, there is known that active matrix system which is arranged to have individual pixel electrodes and switching elements respectively connected to the electrodes for driving the selective one of the pixel electrodes.

As such a switching element to selectively drive the pixel electrodes, in general, a thin film transistor (TFT) element, a metal-insulated film-metal (MIM) element, or a metal oxide semiconductor (MOS) transistor element is used. The switching element operates to switch on and off a voltage to be applied between the pixel electrode and its opposite electrode opposing to the pixel electrode in a manner to optically modulate a display medium such as a liquid crystal, an electroluminescent layer or a plasma luminous layer laid between both of the pixel electrode and the opposite electrode. The optical modulation of the display medium results in forming an image.

Such an active-matrix driving system implements a high-contrast display. In practice, the system is used for a display unit of a liquid crystal television, a wordprocessor machine or a computer terminal.

Now, the description will be directed to the structure of the active-matrix liquid crystal display known by the inventors of the present application.

The known active-matrix liquid crystal display device is arranged to have a TFT substrate. The TFT substrate is structured to have a glass substrate, a scan wire (gate wire) layer made from tantalum (Ta) formed on the glass substrate, a signal wire (source wire) layer made from titanium (Ti), and a pixel electrode made from a transparent conductive film ITO indium tin oxide laminated in the described sequence. The laminations are arranged in a matrix format. The scan wire is insulated from an intrinsic semiconductor noncrystalline silicon, an n-type semiconductor noncrystalline silicon, a source electrode, a drain electrode and a pixel electrode through the effect of a anodised tantalum oxide ($Ta_2O_5$) insulating film and an $SiN_x$-gate insulating film.

Each pixel electrode is connected to a TFT made from noncrystalline silicon (a-Si) serving as a switching element. This TFT is provided with intrinsic semiconductor noncrystalline silicon, n-type semiconductor noncrystalline silicon, a source electrode, an etching protecting film and a drain electrode. On the TFT substrate, an $SiN_x$ film is formed as a protecting film. On the $SiN_x$ film, an orientation film is formed.

An opposite substrate opposing to the TFT substrate is located to keep a predetermined interval from the TFT substrate. On the glass substrate of the opposite substrate, an opposite electrode consisting of a transparent conductive film ITO is formed. An orientation film is formed on the opposite electrode. Between the TFT substrate and the opposite substrate formed as above, there is injected a liquid crystal.

In the known liquid crystal display device, as the screen is made larger, the parasitic capacitance is increased, which brings about the delay of the input signal. Further, if it may apply to the large high-definition screen, the scan wire and the signal wire are made longer in length and narrower in width. To endure such a form, tantalum (Ta), chrome (Cr), aluminum (Al) or molybdenum (Mo) is used for making the scan wire and the signal wire, because those materials have a small specific resistance.

As the TFT substrate and the opposite substrate are made as large as several tens of inches, the wire width used for the substrate is as narrow as several µm. Further, as the film is as thin as several thousand angstrom, the resistance of the wire has to be suppressed more if those materials are used for making the wire.

Moreover, the resistances of the signal wire and the scan wire and the capacitance at the crossing portion between the signal wire and the scan wire bring about the delay of an input signal, which disadvantageously makes the display image uneven.

If the pixels are increased in number for achieving a high-definition or a large display, the capacitance at the crossing portion is made larger. The larger capacitance makes it difficult to drive the pixel electrode. It means that the implementation of the high-definition or the large display is made impossible.

Furthermore, since the thickness of the gate insulating film is as thin as 300 nm to 400 nm (3000 angstrom to 4000 angstrom), pin holes are likely to take place at the crossing portion. Since the pin hole serves to shortcircuit the source with the gate of the TFT, the yield is made lower.

To overcome the shortcircuit between the pixel electrode and the signal wire or the scan wire and the pixel electrode, it is necessary to keep the interval between the pixel electrode and the signal wire or the scan wire and the pixel electrode 10 µm or more. The interval results in making it difficult to enhance a numerical aperture. ("Numerical aperture" means "the ratio of the area of the pixel electrode to the area assigned to one pixel".)

Next, the description will be directed to the structure of another active-matrix liquid crystal display known by the inventors of the present application.

This display is arranged to have a TFT substrate which includes a glass substrate, a scan line made from tantalum (Ta), a signal line made from titanium (Ti), a pixel electrode made of a transparent conductive film consisting of indium tin oxide (ITO) and tin doped thereto, and a TFT made from noncrystalline silicon (a-Si). The scan line, the signal line and the pixel electrode are located on the glass substrate in a matrix format. Each pixel electrode is connected to the TFT served as a switching element.

As a material for the signal line or the pixel electrode, chrome (Cr), aluminum (Al), and molybdenum (Mo) may be used in addition to tantalum (Ta) and titanium (Ti).

The known active-matrix liquid crystal display circuit includes an electric arrangement of the TFT substrate. The circuit includes a data line serving as a source line, a scan line serving as a gate line, a TFT element, a capacitor ($C_{LC}$) between the pixel electrodes and an auxiliary capacitor ($C_S$).

The known active-matrix liquid crystal display device includes the TFT substrate containing pixels. An equivalent circuit of one pixel contained in the TFT substrate is arranged to have a data line serving as a source line, a scan line serving as a gate line, a TFT element, a capacitor ($C_{LC}$) between the pixel electrodes, an auxiliary capacitor, and two floating capacitors ($C_{gd}$).

Firstly, in this kind of liquid crystal display, as described with respect to the foregoing known display, with the higher definition of the display, the number of the source wires and the gate wires is increased. The capacitance at the crossing portion between the source wire and the gate wire is made larger. The larger capacitance results in making it more difficult to drive the display.

Secondly, the TFT is normally arranged to overlap partially the gate electrode with the drain electrode through the insulating layer laid therebetween for avoiding the offset between the gate and the drain in order to secure the process margin in manufacturing.

The floating capacitor $C_{gd}$ causes a constant voltage drop due to the capacitance coupling. The voltage drop is represented by the following expression (1). The voltage drop causes a flicker on the screen, thereby degrading the image quality. This is a large practical disadvantage.

$$\Delta V = \{C_{gd}/(C_{gd}+C_{LC}+C_S)\} \times V_G \qquad (1)$$

wherein $\Delta V$ denotes a voltage drop, $C_{gd}$ denotes a floating capacitance between the gate and the drain, $C_{LC}$ denotes a capacitance between the pixel electrodes, $C_S$

denotes an auxiliary capacitance, and $V_G$ denotes a gate signal voltage.

Thirdly, to make the screen larger and the display image more definitive, the gate wire or the source wire is made longer and narrower. Hence, the gate electrode is made from metal such as Ta, Cr, Al and Mo having a small specific resistance. However, as the substrate is made as large as several tens of inches, the line is made as narrow as several $\mu$m and the film thickness is made as thin as several thousands angstrom. If any of these materials is used, the resistance of the wire is relatively made disadvantageously high. Concretely, the resistance of the wire and the capacitance at the crossing portion of the wire cause the input signal to be delayed and make the display image uneven.

JP-A-2-89029, on which the preamble of claim 1 is based, discloses a liquid crystal display device with a light waveguide and a photoconductive layer. The wavelength of light used to control the photoconductive layer, and thereby to connect a pixel electrode to a signal electrode, is 680nm. This wavelength is in the visible spectrum.

JP-A-1-173016 discloses a liquid crystal display device with a light waveguide and a photoconductive body. Light is applied to the body, via the waveguide, to apply a voltage to the liquid crystal. A shielding film against external light is provided.

JP-A-1-156724 discloses a thin film transistor array with a light waveguide and a gate for converting an optical signal into an electrical signal. The light waveguide has a reflecting film for transmitting the light to the gate, and this film will act as a shielding film against external light.

EP-A-490 484 discloses a display apparatus with linear luminous sources and optical switches each disposed on a photoconductive layer. A light-shielding layer is formed on the transparent electrode.

According to the present invention there is provided a display device comprising a display medium, a pixel electrode for driving said display medium, a plurality of signal wires arranged in one of a row direction and a column direction, a light waveguide arranged so as to cross with said plurality of signal wires in the other of said row direction and said column direction, a luminous element disposed on an end of said light waveguide for applying a ray of light to said waveguide, a light sensing element for electrically connecting said pixel electrode with one of said signal wires corresponding to said pixel electrode when said light waveguide receives said ray of light; characterised in that said luminous element is adapted to emit light having a wavelength outside the visible spectrum; and in that the light sensing element is not shielded from ambient light.

In a preferred embodiment the luminous element is a light emitting diode or a laser diode, and in a particularly preferred embodiment is a GaAs system light emitting diode or a laser diode.

In a preferred embodiment the display medium is a liquid crystal.

In a preferred embodiment the light waveguide is formed by implanting K+ ions in said first substrate.

In a preferred embodiment the luminous element generates light having a wavelength greater than one micrometer.

In a preferred embodiment the display medium is a luminous plasma.

In the invention, the luminous element applies light to the light sensing element (or the "light-receptacle element") through the light waveguide. In response to the light, the light-receptacle element serves to electrically connect the pixel electrode and the corresponding signal wire. As a result, a voltage is applied to the pixel electrodes so that the display medium for the voltage-applied pixel electrodes is optically modified for displaying an image. That is, in place of the scan line in the foregoing known arrangement, the light waveguide is used for overcoming the disadvantages due to the wire resistance and the capacitance of the crossing portion between the scan wire and the signal wire. As such, the increase of the pixels does not become an obstacle to driving the pixel electrodes. This indicates that the arrangement of this invention can implement the high-definition or large display. Lack of the disadvantage due to the capacitance at the crossing portion causes no delay of the scan signal, which means the display of an even image. Further, no pin hole takes place at the cross point, thereby improving the yield. Besides, no shortcircuit between the scan wire and the pixel wire takes place. Hence, the light waveguide is allowed to be located closer to the pixel electrode. This makes contribution to improving the numerical aperture.

In the invention, the luminous element applies a ray of light having a wavelength outside the visible spectrum to the photoelectric converting element through the light waveguide. In response to the light, the photoelectric converting element serves to electrically connect the pixel electrode with the corresponding signal wire. As a result, the voltage is applied to the pixel electrodes so that the display medium for the voltage-applied electrodes is optically modulated for displaying an image.

The luminous element applies a ray of light having a different wavelength from ambient (visible) light or the backlight and the photoelectric converting element receives the light. This light relay makes it possible to prevent erroneous operation owing to the ambient light or a backlight, thereby being able to display a uniform and a high-quality image. That is, in place of the scan wire in the foregoing known arrangement, the light waveguide is used for overcoming the disadvantages due to the wire resistance and the capacitance of the crossing portion between the scan wire and the signal wire. As such, the increase of the pixels does not become an obstacle to driving the pixel electrodes. This indicates that the arrangement of this invention can implement the high-definition or large display. Lack of the disadvantage due to the capacitance at the crossing portion causes no delay of the scan signal, which means the display of an even image. Further, no pin hole takes place at the cross point, thereby improving the yield. Besides, no shortcircuit between the scan wire and the pixel wire takes place. Hence, the light waveguide is allowed to be located closer to the pixel electrode. This makes contribution to improving the numerical aperture.

Many widely different embodiments of the present invention may be constructed without departing from the scope of the present invention. It should be understood that the present invention is not limited to the specific embodiments described in the specification, but is defined in the appended claims.

BRIEF DESCRIPTION OF THE DRAWINGS

Fig. 1 is a perspective view showing an arrangement of a matrix included in a display device according to a comparative example;

Fig. 2 is a circuit diagram showing an electric arrangement of a TFT substrate included in an active-matrix liquid crystal display device according to the related art of the invention;

Fig. 3 is an equivalent circuit showing one of the pixels included in the TFT substrate shown in Fig. 2;

Fig. 4 is a partial section showing the display device shown in Fig. 1, in particular, the cross section of a light-receptacle element included in the display device;

Fig. 5 is a circuit diagram showing an electric arrangement of a matrix substrate included in the display device shown in Fig. 1;

Fig. 6 is a perspective view showing a process for manufacturing the display device according to the comparative example;

Fig. 7 is a perspective view showing a manufacturing process following the process shown in Fig.6;

Fig. 8 is a perspective view showing a manufacturing process following the process shown in Fig. 7;

Fig. 9 is a perspective view showing a manufacturing process following the process shown in Fig. 8;

Fig. 10 is a perspective view showing the matrix substrate included in a display device according to an embodiment of the invention;

Fig. 11 is a partial section showing the display device shown in Fig. 10, in particular, the cross section of a photoelectric converting element included in the display device;

Fig.12 is a circuit diagram showing an electric arrangement of a matrix substrate included in the display device shown in Fig. 10;

Fig.13 is a perspective view showing a process for manufacturing the display device shown in Fig. 10;

Fig.14 is a perspective view showing a manufacturing process following the process shown in Fig.13;

Fig.15 is a perspective view showing a manufacturing process following the process shown in Fig.14; and

Fig.16 is a perspective view showing a manufacturing process following the process shown in Fig.15.

## DESCRIPTION OF THE PREFERRED EMBODIMENTS

The TFT substrate of the known active-matrix liquid crystal display device is explained to clarify the constitutional difference from the invention.

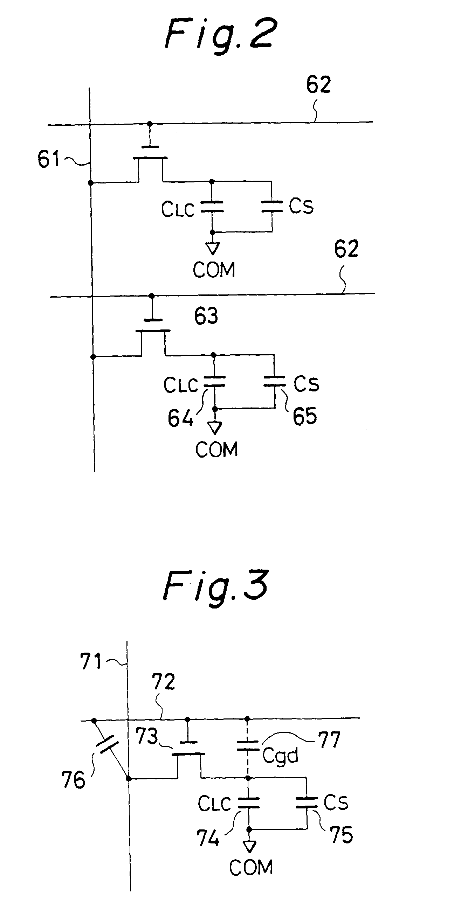

In Fig. 2, the known active-matrix liquid crystal display circuit includes an electric arrangement of the TFT substrate. The circuit includes a data line 61 serving as a source line, a scan line 62 serving as a gate line, a TFT element 63, a capacitor ($C_{LC}$) 64 between the pixel electrodes and an auxiliary capacitor ($C_S$) 65.

In Fig. 3, an equivalent circuit of one pixel contained in the TFT substrate is arranged to have a data line 71 serving as a source line, a scan line 72 serving as a gate line, a TFT element 73, a capacitor ($C_{LC}$) 74 between the pixel electrodes, an auxiliary capacitor ($C_S$) 75, and two floating capacitors 76 and ($C_{gd}$)77.

Herein, the description will be directed to a display device according to a comparative example.

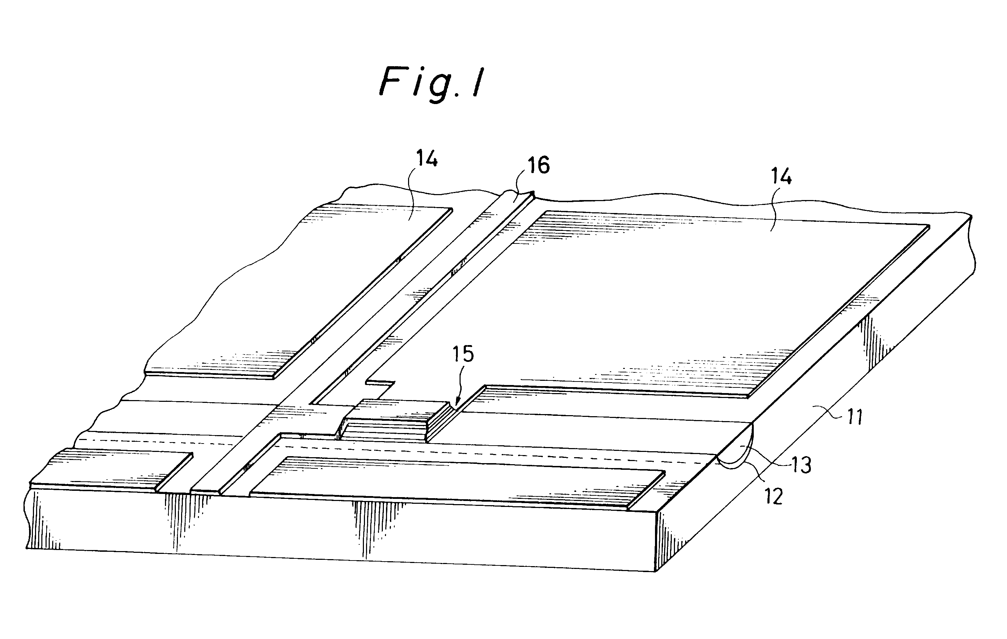

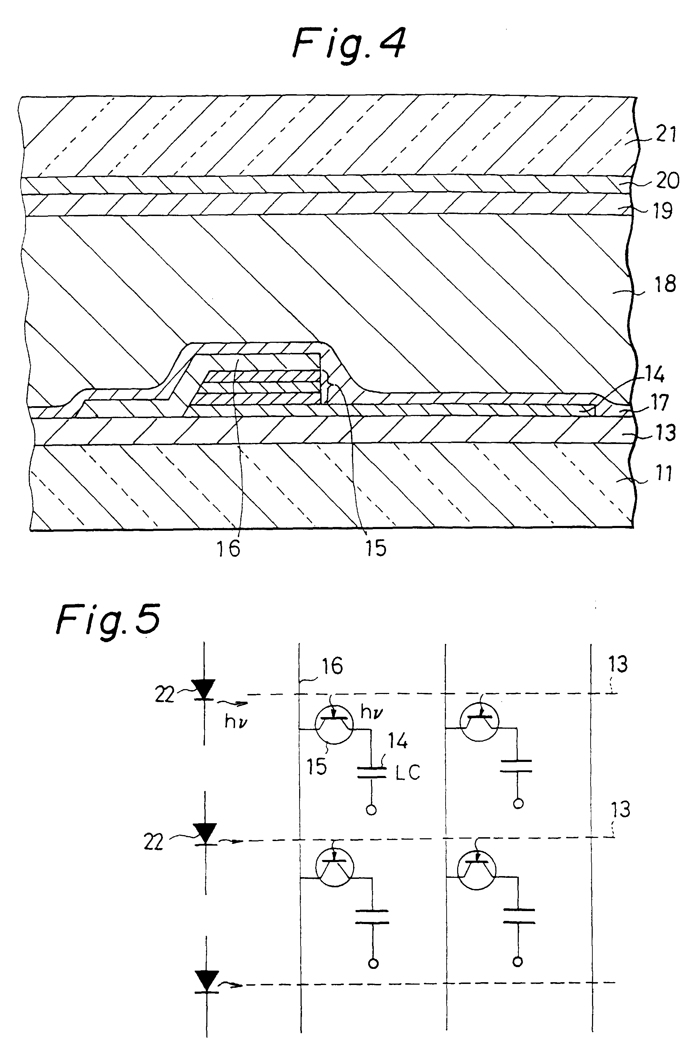

Fig. 1 is a perspective view showing the structure of a matrix substrate. Fig. 4 is a partial section showing a cross section of a light-receptacle element included in the display device shown in Fig. 1. In Fig. 1, an orientation film 17 is not shown, though it is shown in Fig.4.

As shown in Figs. 1 and 4, a numeral 11 denotes a glass substrate on which a plurality of pixel electrodes 14 are formed in a matrix format.

Within the glass substrate 11, a light waveguide 13 for scanning is formed for each row (or column) of the pixel electrode 14. On the other hand, at each column (or each row) of the pixel electrode 14 on the glass substrate 11, a signal wire 16 made from metal is provided to be crossed, for example, perpendicularly, with the light waveguide 13.

Between the light waveguide 13 and the glass substrate 11, a shielding film 12 is provided for shielding light from the glass substrate 11.

The light waveguide 13 is made of a $K^+$ ion exchange waveguide which is 10 μm in width and 5 μm in depth, for example. One end of the light waveguide 13 is connected to a luminous element (not shown) to be described later.

In the illustrative embodiment, the signal wire 16 is made of an aluminum film which has a thickness of 3000 angstrom. The pixel electrode 14 is made of an ITO film which has a thickness of 1000 angstrom.

At a crossing section between the light waveguide 13 and the signal wire 16, there is located a light-receptacle element 15, which serves as a switching element for electrically connecting the pixel electrode 14 with the signal wire 16 or disconnecting them from each other.

The light-receptacle element 15 is made of a photoelectric converting element such as an a-Si:H (noncrystalline silicon hydride) pin type photo-diode, one end of which is connected to the signal wire 16 and the other end of which is connected to the pixel electrode 14. Alternatively, the light-receptacle element 15 may be made of a photoelectric converting element consisting of a-Si (noncrystalline silicon).

As described above, the matrix substrate is arranged to have the shielding film 12, the light waveguide 13, the pixel electrode 14, the light-receptacle element 15 and the signal wire 16 formed on the glass substrate 11. The orientation film 17 is formed on the matrix substrate as shown in Fig. 4.

An opposite substrate to the matrix substrate is located to keep a predetermined interval off the matrix substrate. On the opposite glass substrate 21, a transparent opposite electrode is formed. On the opposite electrode 20, an orientation film 19 is formed. Between the matrix substrate and the opposite substrate, a liquid crystal 18 is injected.

Fig. 5 is a circuit diagram showing an electric arrangement of the display device shown in Fig. 1.

As shown in Fig. 5, at each end of the light waveguide 13, the luminous element 22 is provided for applying a ray of light (having energy indicated by hυ in Fig. 5) into the light waveguide. The luminous element 22 is a GaAs system LED (light-emitting diode) or a laser diode.

The light-receptacle element 15 formed on the light waveguide 13 is formed to receive light (having energy indicated by hυ in Fig. 5) applied from the luminous element 22 to the light waveguide 13.

In the arrangement, as shown in Figs. 1, 4 and 5, the luminous element 22 provided for each light waveguide 13 is sequentially operated to emit light so that a scanning light signal may be sent to the light waveguide 13. In receipt of the light signal, the light-receptacle element 15 controls the signal sent from the signal wire 16 for driving the pixel electrode 14. That is, when the light-receptacle element 15 receives the light signal, the element 15 is switched on so that the pixel electrode 14 may be electrically connected to the corresponding signal wire 16.

As such, a voltage being applied between the signal wire 16 and the opposite electrode 20 is also applied between the pixel electrode 14 and the opposite electrode 20. The voltage-applied defined portion of the liquid crystal 18 is optically modified so as to form an image.

In turn, the description will be directed to the manufacturing process for the display device according to the comparative example.

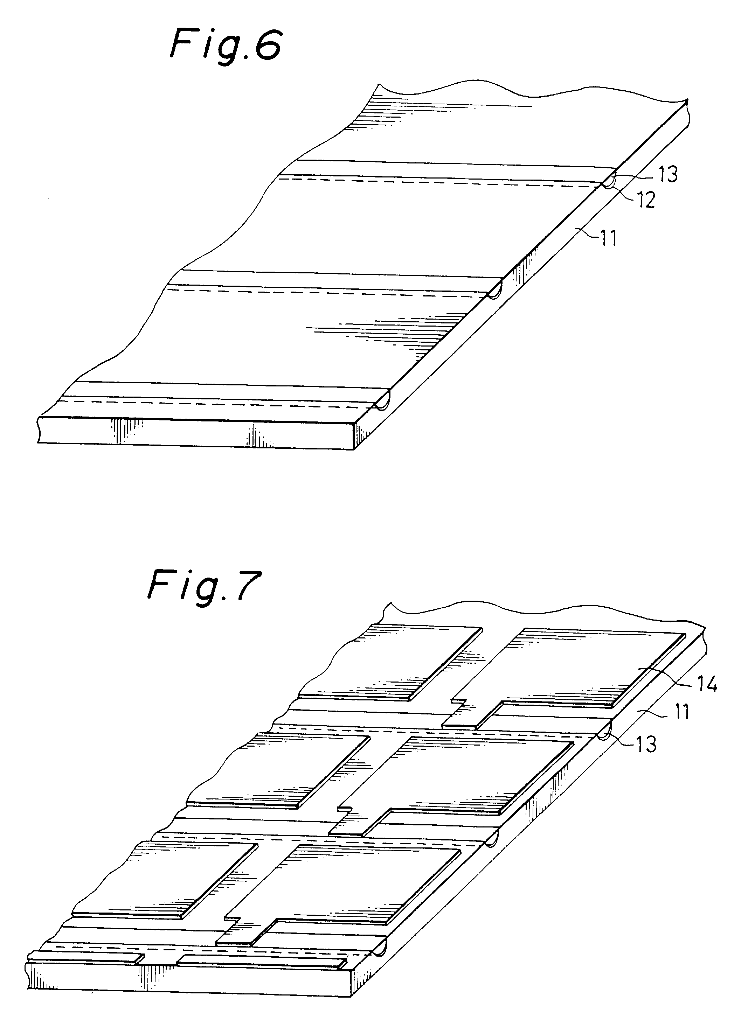

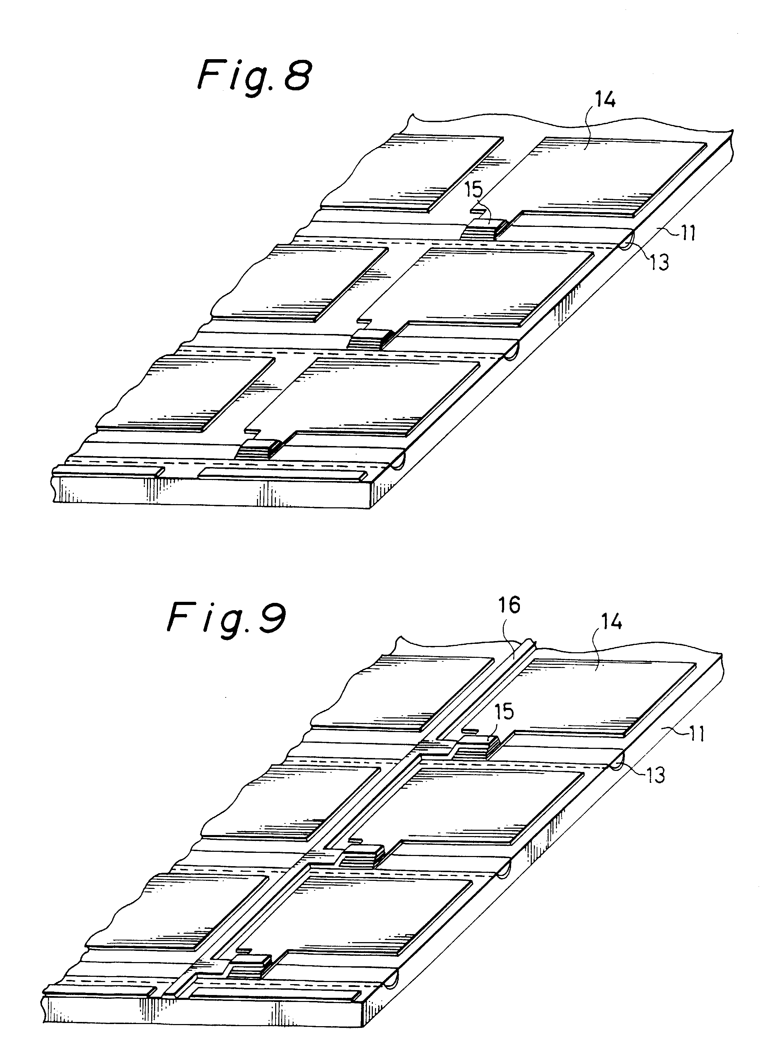

Fig. 6 is a perspective view showing the manufacturing process for the display device according to the comparative example. Fig. 7 is a perspective view showing the process following the manufacturing process shown in Fig. 6. Fig. 8 is a perspective view showing the process following the manufacturing process shown in Fig. 7. Fig. 9 is a perspective view showing the process following the manufacturing process shown in Fig. 8.

As shown in Fig. 6, at first, the light waveguide 13 is formed on the glass substrate 11 through the effect of the $K^+$ ion exchange method. Then, as shown in Fig. 7, the pixel electrode 14 made of an ITO film is formed in a matrix manner. Next, as shown in Fig. 8, on the portion where the light waveguide 13 is overlapped with the pixel electrode 14, there is formed a photoelectric converting element of an a-Si:H pin type, for example. This means the light-receptacle element 15.

Then, as shown in Fig. 9, the signal wire 16 made from aluminum is formed perpendicularly to the light waveguide 13.

After manufacturing the matrix substrate along the foregoing steps, as shown in Fig.4, the orientation film 17 is formed on the matrix substrate and the orientation film 19 is formed on the opposite substrate where the opposite electrode 20 is formed. Then, the rubbing treatment is carried out on the orientation films.

Next, the matrix substrate is glued to the opposite substrate with a space (not shown) left between the two substrates. The liquid crystal 18 is injected between those substrates. Then, the display-device is completed.

In the foregoing illustrative embodiment, the luminous element is operated to apply a ray of light into the light waveguide. The ray of light travels to the light-receptacle element through the light waveguide. In response to the light, the light-receptacle element operates to electrically connect the pixel electrode with the corresponding signal wire. The electrical connection results in applying a voltage into the pixel electrode. The liquid crystal corresponding to the voltage-applied portion of the pixel electrode is optically modified for displaying an image.

As noted above, the light waveguide is used in place of the scan wire used in the heretofore-proposed display device. The light waveguide does not bring about any problem about the wire resistance and the capacitance at the crossing portion between the scan wire and the signal wire which have been obstacles to enhancing the performance of the known display device.

There is no capacitance at a crossing portion to cause a scan signal to be delayed. The light scanning allows for rapid switching, which results in being able to implement an even and uniform image display.

Further, at the crossing portion, no pin holes are formed. This makes contribution to improving the yield of the display device according to this embodiment. Moreover, no shortcircuit may take place between the scan wire and the pixel electrode. That is, the light waveguide is allowed to be located closer to the pixel electrode. thereby improving the numerical aperture of the display device.

According to this comparative example, the light waveguide taking the place of the scan line is formed within the glass substrate. Hence, no concavities or convexities are formed on the substrate. As such, the signal wire is allowed to be formed on a level substrate. This makes contribution to preventing occurrence of the disconnection of the signal wire.

In the illustrative embodiment, the liquid crystal is used as the display medium. As another medium, an electroluminescent luminous material or a plasma luminous material may be used for the display medium.

Next, the description will be directed to a display device according to an embodiment of the invention.

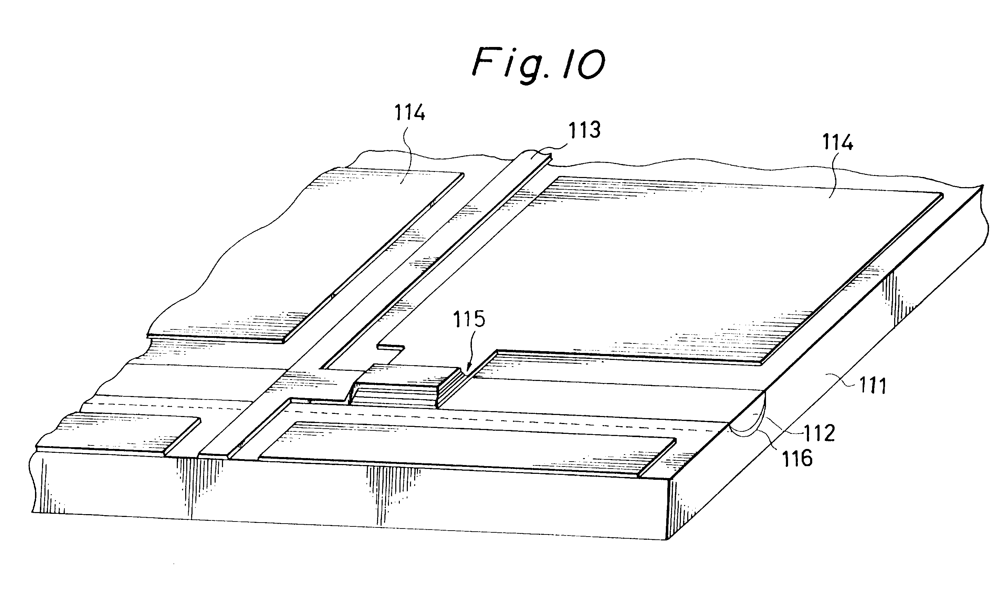

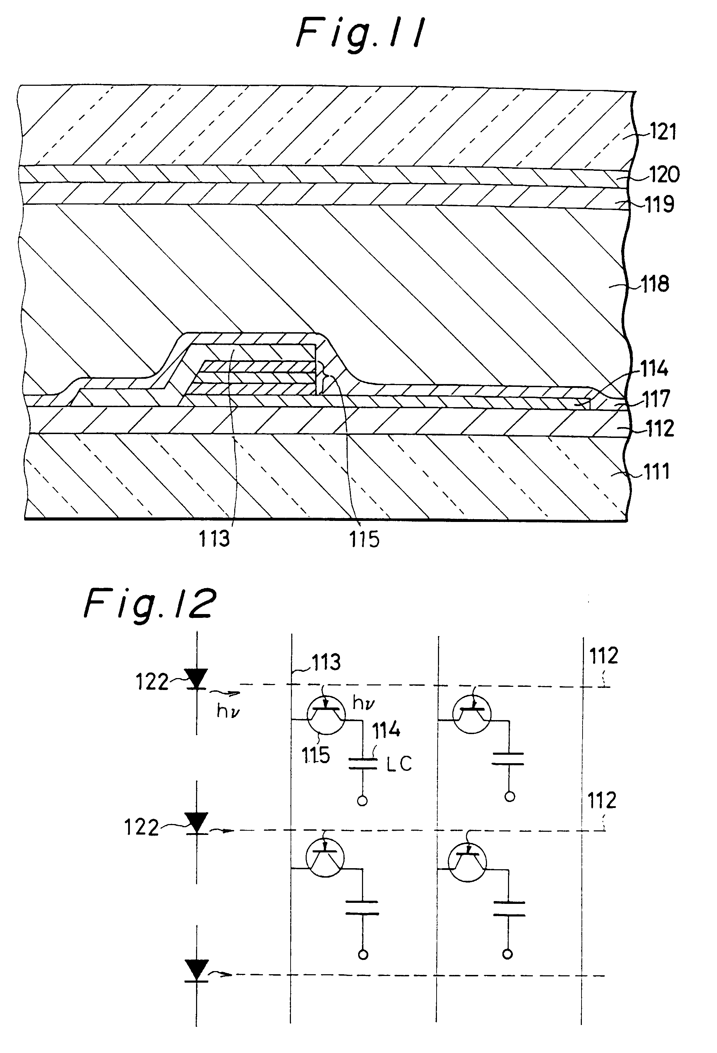

Fig. 10 is a perspective view showing a matrix substrate included in the display device according to an embodiment of the invention. Fig.11 is a partial sectional view showing the display device shown in Fig. 10, in particular, the cross section of a photoelectric converting element included in the display device.

In Fig. 10, an orientation film 117 (to be described later) is not shown, though the film 117 is shown in Fig. 11. A shielding film 116 is shown in Fig. 10. However, the shielding film is not present in a display device of the invention.

As shown, the matrix substrate is arranged to have a transparent insulated substrate 111 made from glass, a light waveguide 112 for scanning, a signal wire 113 made of a metal wire, a pixel electrode 114, a photoelectric converting element 115, and the orientation film 117. The pixel electrodes 114 are formed on the insulated substrate 111 in a matrix format. Within the insulated substrate 111, the light waveguide 112 is formed on each row (or each column) of the pixel electrode 114. On the other hand, on the insulated substrate 111, the signal wire 113 made of some metal is crossed, for example, perpendicularly, with the light waveguide 112 on each column (or each row) of the pixel electrode 14.

The light waveguide 112 is made of a $K^+$ ion exchange waveguide which is 10 μm in width and 5 μm in depth, for example. One end of the light waveguide 112 is connected to a luminous element (not shown) to be described later.

In the illustrative embodiment, the signal wire 113 is made of an aluminum film which has a thickness of 3000 angstrom. The pixel electrode 114 is made of an ITO film which has a thickness of 1000 angstrom.

At a crossing section between the light waveguide 112 and the signal wire 113, there is located a photoelectric converting element 115, which serves as a switching element for electrically connecting the pixel electrode 114 with the signal wire 113 through the switching element or disconnecting them from each other. Both ends of the photoelectric converting element 115 are connected to the signal wire 113 and the pixel electrode 114, respectively.

As described above, the matrix substrate is arranged to have the light waveguide 112, the pixel 114, the photoelectric converting element 115 and the signal wire 113 formed on the glass substrate 111. The orientation film 117 is formed on the matrix substrate as shown in Fig. 11.

An opposite substrate to the matrix substrate is located to keep a predetermined interval off the matrix substrate. On the opposite glass substrate 121, a transparent opposite electrode is formed. On the opposite electrode 120, an orientation film 119 is formed. Between the matrix substrate and the opposite substrate, a liquid crystal 118 is injected.

Fig. 12 is a circuit diagram showing an electric arrangement of the matrix substrate included in the display device shown in Fig. 10.

As shown in Fig. 12, at each end of the light waveguide 113, the luminous element 122 is provided for applying a ray of light (having energy indicated by hu in Fig. 12) into the light waveguide. The luminous element 122 is a GaAs system LED (light-emitting diode) or a laser diode.

The photoelectric converting element 115 is formed on the light waveguide 13 so that it may receive light (having energy indicated by hu in Fig. 12) applied from the luminous element 122 to the light waveguide 112.

The luminous element 122 operates to apply a light signal having a different wavelength from visible light (such as ambient light and backlight). For example, if the wavelength of the ambient light is in the range of $\lambda < 0.80\ \mu m$, the light emitted from the luminous element 122 has a different wavelength from the wavelength $\lambda$, concretely, a long wavelength $\lambda'$ ($\lambda' = 1.1\ \mu m$ to $1.7\ \mu m$). The luminous element 122 is formed of InGaAs (Indium Gallium Arsenide) semiconductor crystal. Correspondingly, the photoelectric converting element 115 is formed of Ge (Germanium) and InGaAs semiconductor crystal so that it may receive the light signal, having a different wavelength $\lambda'$ from the wavelength $\lambda$ of the ambient light, from the luminous element.

In the arrangement, as shown in Figs. 10 to 12, the luminous element 122 provided for each of the light waveguides 112 is sequentially operated to emit light so that the scanning light signal may be sent to the light waveguide 112. In receipt of the light signal, the photoelectric converting element 115 controls the signal sent from the signal wire 113 for driving the pixel electrode 114. That is, when the photoelectric converting element 115 receives the light signal, the photoelectric converting element 115 is switched on so that the pixel electrode 114 may be electrically connected to the corresponding signal wire 113.

As such, a voltage being applied between the signal wire 116 and the opposite electrode 120 is also applied between the pixel electrode 114 and the opposite electrode 120. The voltage-applied defined portion of the liquid crystal 118 is optically modified so as to form an image.

In turn, the description will be directed to the manufacturing process for the display device according to this embodiment.

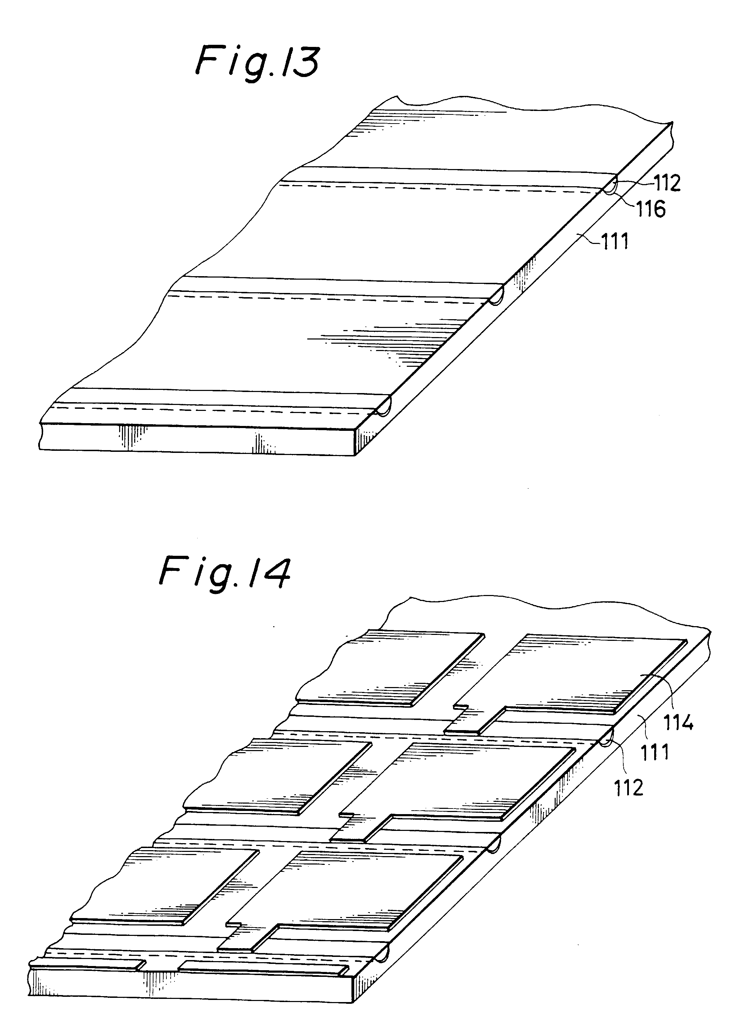

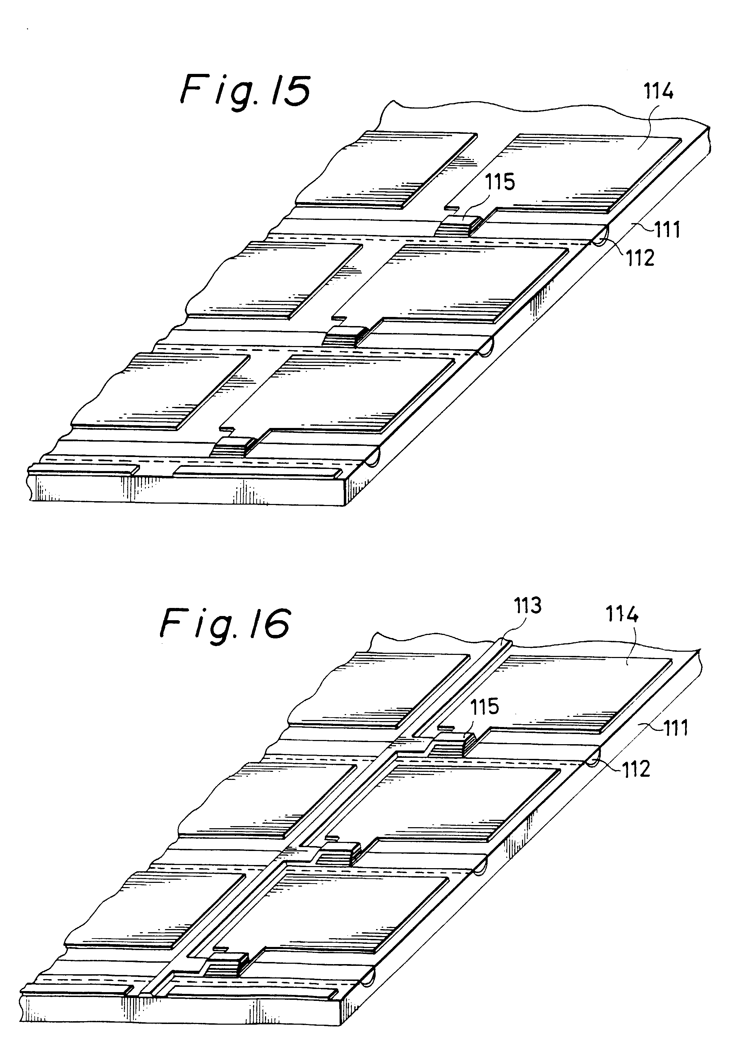

Fig. 13 is a perspective view showing the manufacturing process for the display device according to the embodiment of the invention. Fig. 14 is a perspective view showing the process following the manufacturing process shown in Fig. 13. Fig. 15 is a perspective view showing the process following the manufacturing process shown in Fig. 14. Fig. 16 is a perspective view showing the process following the manufacturing process shown in Fig. 15.

As shown in Fig. 13, at first, the light waveguide 112 is formed on the glass substrate 111 through the effect of the $K^+$ ion exchange method. Then, as shown in Fig. 14, the pixel electrode 114 made of an ITO film is formed in a matrix manner. Next, as shown in Fig. 15, on the portion where the light waveguide 112 is overlapped with the pixel electrode 114, there is formed a photoelectric converting element of an a-Si:H pin type, for example. This means the photoelectric converting element 115.

Then, as shown in Fig. 16, the signal wire 113 made from aluminum is formed perpendicularly to the light waveguide 112.

After manufacturing the matrix substrate along the foregoing steps, as shown in Fig. 11, the orientation film 117 is formed on the matrix substrate and the orientation film 119 is formed on the opposite substrate where the opposite electrode 120 is formed. Then, the rubbing treatment is carried out on the orientation films.

Next, the matrix substrate is pasted with the opposite substrate through a space (not shown) laid therebetween. The liquid crystal 118 is injected between those substrates. Then, the display device is completed.

In the foregoing illustrative embodiment, the luminous element is operated to apply a ray of light into the light waveguide. The ray of light travels to the light-receptacle element through the light waveguide. In response to the light, the light-receptacle element operates to electrically connect the pixel electrode with the corresponding signal wire. The electrical connection results in applying a voltage into the pixel electrode. The liquid crystal corresponding to the voltage-applied portion of the pixel electrode is optically modified for displaying an image.

As noted above, the luminous element is formed of InGaAs semiconductor crystal, for example, so that it may apply a light signal having a different wavelength from visible light such as ambient light and backlight. The photoelectric converting element is formed of Ge and InGaAs semiconductor crystal so that it may receive the light signal having the different wavelength. This results in preventing the occurrence of erroneous operation due to the unnecessary ambient light, thereby displaying a uniform and high-quality image.

That is, the light waveguide is used in place of the scan wire used in the heretofore-proposed display device. The light waveguide does not bring about any problem about the wire resistance and the capacitance at the crossing portion between the scan wire and the signal wire which have been obstacles to enhancing the performance of the known display device.

There is no capacitance at the crossing portion to cause a scan signal to be delayed. The light scanning allows for rapid switching, which results in being able to implement the even and uniform image display.

Further, at the crossing portion, no pinholes are formed. This makes contribution to improving the yield of the display device according to this embodiment. Moreover, no shortcircuit may take place between the scan wire and the pixel electrode. That is, the light waveguide is allowed to be located closer to the pixel electrode, thereby improving the numerical aperture of the display device.

According to this embodiment, the light waveguide taking a part of the scan line is formed within the glass substrate. Hence, no concavities or convexities are formed on the substrate. As such, the signal wire is allowed to be formed on the leveled substrate. This makes contribution to preventing occurrence of the disconnection of the signal wire.

The foregoing luminous element and photoelectric converting element make it possible to prevent occurrence of erroneous operation due to the unnecessary ambient light. Hence, it is unnecessary to provide the shielding layer for shielding the ambient light incident to the light waveguide. This eliminates the process for forming the shielding layer when manufacturing the display device. As compared to the arrangement having the shielding layer, the display device according to this invention is implemented at low cost, high yield and high reliability and may offer a high-definitive image.

In the illustrative embodiment, the liquid crystal is used as the display medium. As another medium, an electroluminescent luminous material or a plasma luminous material may be used for the display medium.

Many widely different embodiments of the present invention may be constructed without departing from the scope of the present invention. It should be understood that the present invention is not limited to the specific embodiments described in the specification, but is defined in the appended claims.

## Claims

1. A display device comprising a display medium (118), a pixel electrode (114) for driving said display medium, a plurality of signal wires (113) arranged in one of a row direction and a column direction, a light waveguide (112) arranged so as to cross with said plurality of signal wires in the other of said row direction and said column direction, a luminous element (122) disposed at an end of said light waveguide for applying a ray of light to said waveguide, a light sensing element (115) for electrically connecting said pixel electrode (114) with one of said signal wires (113) corresponding to said pixel electrode (114) when said light waveguide (112) receives said ray of light;

characterised in that said luminous element is adapted to emit light having a wavelength outside the visible spectrum; and in that the light sensing element is not shielded from ambient light.

2. A display device according to claim 1, wherein the luminous element (122) is a light emitting diode or a laser diode.

3. A display device according to claim 2, wherein the luminous element (122) is a GaAs system light emitting diode or a laser diode.

4. A display device according to claim 1, 2 or 3, wherein the display medium (118) is a liquid crystal.

5. A display device according to any preceding claim, wherein the light waveguide (112) is formed by implanting K+ ions in said first substrate (111).

6. A display device according to any preceding claim, wherein the luminous element (122) generates light having a wavelength greater than one micrometer.

7. A display device according to any preceding claim, wherein the display medium is a luminous plasma.

## Patentansprüche

1. Anzeigevorrichtung mit einem Anzeigemedium (118), einer Pixelelektrode (114) zum Ansteuern des Anzeigemediums, einer Vielzahl von Signalleitungen (113), die in einer Zeilen- oder einer Spaltenrichtung angeordnet sind, einem Lichtwellenleiter (112), der so angeordnet ist, dass er die Vielzahl von Signalleitungen in der anderen Richtung betreffend die Zeilen- und die Spaltenrichtung schneidet, einem Leuchtelement (122), das an einem Ende des Lichtwellenleiters angeordnet ist, um dem Wellenleiter Lichtstrahlung zuzuführen, einem Lichterfassungselement (115) zum elektrischen Verbinden der Pixelelektrode (114) mit einer der Signalleitungen (113), die der Pixelelektrode (114) entspricht, wenn der Lichtwellenleiter (112) die Lichtstrahlung empfängt;

**dadurch gekennzeichnet, dass** das Leuchtelement so ausgebildet ist, dass es Licht mit einer Wellenlänge außerhalb des sichtbaren Spektrums emittiert, und dass das Lichterfassungselement nicht gegen Umgebungslicht abgeschirmt ist.

**2.** Anzeigevorrichtung nach Anspruch 1, bei der das Leuchtelement (122) eine Lichtemissionsdiode oder eine Laserdiode ist.

**3.** Anzeigevorrichtung nach Anspruch 2, bei der das Leuchtelement (122) eine Lichtemissionsdiode oder eine Laserdiode aus dem GaAs-System ist.

**4.** Anzeigevorrichtung nach Anspruch 1, 2 oder 3, bei der das Anzeigemedium (118) ein Flüssigkristall ist.

**5.** Anzeigevorrichtung nach einem der vorstehenden Ansprüche, bei der der Lichtwellenleiter (112) durch Implantieren von K$^+$-Ionen durch das erste Substrat (111) hergestellt ist.

**6.** Anzeigevorrichtung nach einem der vorstehenden Ansprüche, bei der das Leuchtelement (122) Licht mit einer Wellenlänge über einem Mikrometer erzeugt.

**7.** Anzeigevorrichtung nach einem der vorstehenden Ansprüche, bei der das Anzeigemedium ein Leuchtplasma ist.

**Revendications**

**1.** Dispositif d'affichage comprenant un support d'affichage (118), une électrode de pixel (114) pour commander ledit support d'affichage, une pluralité de conducteurs électriques de signaux (113) disposés selon une direction parmi une direction de rangée et une direction de colonne, un guide d'onde de lumière (112) disposé de façon à croiser ladite pluralité de conducteurs électriques de signaux dans l'autre direction parmi ladite direction de rangée et ladite direction de colonne, un élément lumineux (122) disposé à une extrémité dudit guide d'onde de lumière pour appliquer un rayon de lumière audit guide d'onde, un élément de détection de lumière (115) pour connecter électriquement ladite électrode de pixel (114) avec l'un desdits conducteurs électriques de signaux (113) correspondant à ladite électrode de pixel (114) lorsque ledit guide d'onde de lumière (112) reçoit ledit rayon de lumière;
caractérisé en ce que ledit élément lumineux est adapté pour émettre une lumière ayant une longueur d'onde à l'extérieur du spectre visible; et en ce que l'élément de détection de lumière n'est pas protégé contre la lumière ambiante.

**2.** Dispositif d'affichage selon la revendication 1, dans lequel l'élément lumineux (122) est une diode luminescente ou une diode laser.

**3.** Dispositif d'affichage selon la revendication 2, dans lequel l'élément lumineux (122) est une diode luminescente du système GaAs ou une diode laser.

**4.** Dispositif d'affichage selon la revendication 1, 2 ou 3, dans lequel le support d'affichage (118) est constitué par des cristaux liquides.

**5.** Dispositif d'affichage selon l'une quelconque des revendications précédentes, dans lequel le guide d'onde de lumière (112) est formé en implantant des ions K+ dans ledit premier substrat (111).

**6.** Dispositif d'affichage selon l'une quelconque des revendications précédentes, dans lequel l'élément lumineux (122) produit une lumière ayant une longueur d'onde supérieure au micromètre.

**7.** Dispositif d'affichage selon l'une quelconque des revendications précédentes, dans lequel le support d'affichage est un plasma lumineux.

# Fig.1

EP 0 542 579 B1

# Fig.2

# Fig.3

# Fig.4

# Fig.5

*Fig.6*

*Fig.7*

## Fig.8

## Fig.9

Fig. 10

# Fig.11

# Fig.12

# Fig.13

# Fig.14

*Fig. 15*

*Fig. 16*